# EUROPÄISCHE PATENTSCHRIFT

(11) **EP 2 954 963 B1**
(45) Veröffentlichungstag und Bekanntmachung des Hinweises auf die Patenterteilung: **16.09.2020**
(21) Anmeldenummer: 14172324.7
(22) Anmeldetag: 13.06.2014
(51) Int. Cl.: B23C 5/10

(54) **Fräser mit zweiphasiger Spanfläche**
Milling cutter with two phase rake face
Fraise à face de coupe à deux phases

(43) Veröffentlichungstag der Anmeldung: 16.12.2015
(73) Patentinhaber: ZÜND SYSTEMTECHNIK AG, 9450 Altstätten (CH)
(72) Erfinder: Zimmermann, Claude, 9320 Arbon (CH); Thurnherr, Adrian, 9463 Oberriet (CH); Jann, Simon, 9450 Altstätten (CH)
(74) Vertreter: Kaminski Harmann

(56) Entgegenhaltungen:
- DE-A1- 10 016 844
- DE-A1- 10 225 481
- DE-A1-102006 037 906
- JP-A- 2005 297 108
- US-A- 3 003 224
- US-A1- 2008 219 782

## Beschreibung

Die Erfindung betrifft einen Fräser zum Einsatz in ein rotierendes Werkzeugfutter eines Flachbettcutters nach dem Oberbegriff des unabhängigen Anspruchs 1.

Maschinelle Fräsverfahren und Maschinen mit rotierendem Werkzeug sowie dafür geeignete Fräser, mit denen speziell das Zerspanen von Platten aus Materialien auf Basis von Holz, Kunststoff und/oder Aluminium vorgesehen ist, sind im Stand der Technik bekannt.

Für derartige Prozesse vorgesehene, ggf. CNC-gesteuerte Flachbettcutter verfügen über eine Gantrybauweise und führen somit eine Werkzeugspindel in einer x- und in einer γ-Achse entlang einer gewünschten Schneidlinie auf der zu schneidenden Platte. Die Werkzeugzustellung erfolgt vertikal in der z-Achse, üblicherweise realisiert durch ein translatorisches Verschieben der Werkzeugspindel. Eine oder mehrere der werkzeugseitig angetriebenen Achsen können alternativ auch werkstückseitig angetrieben werden, z.B. über den die Platte einspannenden Schlitten, so dass z.B. eine Ständer-, Konsol-, Kreuzbett-, Tisch- oder Portalbauweise verwirklicht wird.

Ein anhand eines Zylinderschaftes oder anderen Werkzeugaufnahmetyps in das Spannfutter der Werkzeugspindel eingespannter Fräser, insbesondere Schaftfräser, weist mindestens eine Schneide mit Spannut auf, welche sich insbesondere schraubenlinienförmig, alternativ auch geradverzahnt, insbesondere rechtsgedrallt, alternativ auch linksgedrallt, umfänglich am schneidenden Teil des Fräsers - im Folgenden Kopfteil genannt - erstreckt. Der Kopfteil hat eine insbesondere zylindrische, alternativ auch kegelförmige oder sonderangefertigte Form.

Für die vorgesehene Bearbeitungsaufgabe des Schneidens von Platten aus besagten Materialien wird zumindest hauptsächlich das Verfahren des Umfangsfräsens genutzt. Es ist dem Fachmann bekannt, dass der Fräser zum senkrechten Eintauchen in die Platte zusätzlich um Stirnschneiden erweitert sein kann. Damit wird vermieden, dass der Schneidprozess vom Rande der Platte aus begonnen werden muss.

Bei der Hochgeschwindigkeitszerspanung wird der Fräser durch die besonders hohen Drehzahlen sehr stark belastet und die hohen Vorschubgeschwindigkeiten verursachen zusätzlich ein hohes Zeitspanvolumen. Die Zufuhr von Kühl- bzw. Schmiermittel ist daher von grosser Bedeutung bei der Auslegung von entsprechenden Prozessen. Aufgrund der hohen Umfangsgeschwindigkeiten an der Fräserschneide wird sie jedoch unter anderem wegen der daraus resultierenden enormen Fliehkräfte erschwert.

Bei der Zerspanung zäher Werkstoffe, wie beispielsweise Aluminium, droht bei unzulänglicher Kühlung weiterhin die Bildung einer Aufbauschneide. Eine Aufbauschneide entsteht durch hochverfestigte Verklebungen des zerspanten Materials an der Werkzeugschneide infolge von Pressschweissvorgängen. Beim Abbrechen dieser Verklebungen scheren oft auch Teile der Werkzeugschneide mit ab, sodass sich die Standzeit durch diesen Verschleiss verkürzt.

Eine Standzeitverringerung bewirken ebenso Ausbrüche infolge einer konstruktiv zu dünnwandigen Schneide. Bekanntermassen rufen grosse Schnittkräfte bei klein gewählten Keilwinkeln Schneidkanten- und/oder Eckenausbrüche hervor. Insbesondere bei der Bearbeitung zäher Werkstoffe erfolgt dies aufgrund von der Frästechnologie geschuldeten Schnittunterbrechungen, welche starke mechanische Wechselbeanspruchungen erzeugen. Grösser gewählte Keilwinkel gewährleisten zwar eine Stabilisierung der Schneide gegen Ausbrüche, jedoch werden aufgrund der stumpfwinkligeren Materialauftrennung bei der Spanbildung die Schneideigenschaften verschlechtert.

Die DE 10 2006 037 906 A1 zeigt ein Fräswerkzeug, welches - ähnlich wie der Fräser der vorliegenden Erfindung - einschneidig ist und für Drehzahlen von 60.000 Umdrehungen pro Minute oder mehr konzipiert ist. Der die Fräserschneide tragende zylindrische Grundkörper ist so ausgebildet, dass der Massenschwerpunkt in jedem Punkt entlang seiner Längsachse in der Rotationsachse zu liegen kommt und die Unwucht damit praktisch auf null reduziert wird.

Die JP 2005 297108 A zeigt einen Schaftfräser, der allerdings zum Fräsen von Werkstücken auf Eisen- und Aluminium-Basis bei deutlich geringeren Drehzahlen konzipiert ist und der anhand einer Spantasche zum Ausstoßen der Späne ein Verringern des Schneidwiderstandes ermöglicht. Dieser Schaftfräser hat 2 bis 10 Schneiden. Eine Spanfläche hat, in einem Querschnitt senkrecht zu Drehachse betrachtet, zwei äußere Spanwinkel. Der erste äußere Spanwinkel ist auf 0° bis 25° und der zweite auf 5° bis 40° eingestellt. Der erste Spanwinkel ist kleiner als der zweite Spanwinkel.

Aus dem Stand der Technik bekannte Fräser für die Aluminiumverarbeitung weisen oftmals eine polierte Spannut auf, um durch die verringerte Reibung eine bessere Spanabfuhr zu gewährleisten. Nachteilig an einer gänzlich polierten Spannut ist jedoch, dass ebenfalls der Kühlschmierstoff kaum mehr an der Oberfläche haften bleibt. Damit wird die Kühlschmierstoffzufuhr am Ort der Hitzeentwicklung deutlich vermindert und das Bilden einer Aufbauschneide immer wahrscheinlicher.

Es ist daher die Aufgabe, für den geschilderten Anwendungsfall einen Fräser mit einer Werkzeuggeometrie und -beschaffenheit bereitzustellen, die neben zerspanungstechnischen Aspekten auch die Kühlschmierstoffzufuhr sowie eine gezielte Vermeidung von sowohl Aufbauschneiden als auch Ausbrüchen berücksichtigt.

Diese Aufgabe wird durch die Verwirklichung der kennzeichnenden Merkmale des unabhängigen Anspruchs gelöst. Merkmale, die die Erfindung in alternativer oder vorteilhafter Weise weiterbilden, sind den abhängigen Patentansprüchen zu entnehmen.

Der erfindungsgemässe Gegenstand betrifft einen Schneidemaschinenfräser zum Einsatz in ein rotierendes Schneidwerkzeug einer Schneidemaschine, ausgebildet und genau vorgesehen zur Fräsbearbeitung einer Platte, insbesondere einer Verbundplatte, aus Material auf Basis von Holz, Kunststoff und/oder eines Nicht-Eisen-Metalls, insbesondere aus Acrylglas/Plexiglas (Polymethylmethacrylat), PET (Polyethylenterephthalat) und/oder Aluminium, insbesondere aus Dibond® (Aluminium-Polyethylen-Verbundplatten) oder MDF (Mitteldichte Holzfaserplatte).

Der Fräser ist vorgesehen zur Verwendung im Rahmen eines automatischen Fräsmodus, in welchem der rotierende Fräser durch die Fräsmaschine programmgesteuert in einer Vorschubrichtung entlang der Platte eingetaucht oder gänzlich durchtrennend geführt wird. Der Fräser ist dabei für das Hochgeschwindigkeitsfräsen im Drehzahlbereich von 20000 U/min bis 100000 U/min, insbesondere für eine Drehzahl von etwa 50000 U/min sowie für Vorschubgeschwindigkeiten von zwischen 2.4 m/min und 120 m/min ausgelegt.

Am Umfang des Fräsers befindet sich genau eine Schneide, deren Spanfläche erfindungsgemäss zwei Phasen aufweist.

Gemäss der Erfindung weist die erste Teilspanfläche eine plane Oberfläche und daher einen durchgängigen Teilspanwinkel (γ₁) von zwischen 18° und 30° auf, der um 4° bis 8°, insbesondere um 5° bis 7° und insbesondere um etwa 6° kleiner ist als der Teilspanwinkel (γ₂) von zwischen 22° und 38° der zweiten Teilspanfläche. Diese Abstufung der Spanfläche realisiert einen grösseren Keilwinkel und bewirkt somit eine Stabilisierung der Schneide gegen Ausbrüche während des Fräsvorgangs sowie verbesserte Schneideigenschaften bei der Spanbildung.

Dabei beträgt der erste Teilspanwinkel (γ₁) bevorzugt zwischen 20° und 28°, insbesondere zwischen 22° und 26°, insbesondere etwa 24° und der zweite Teilspanwinkel (γ₂) zwischen 24° und 36°, insbesondere zwischen 26° und 34°, insbesondere zwischen 28° und 32° und insbesondere etwa 30°.

Gemäss der Erfindung weist die erste Teilspanfläche zudem eine polierte Oberfläche und die zweite Teilspanfläche eine unpolierte Oberfläche auf. Das den Fräsprozess positiv beeinflussende Schmiermittel kann auf der unpolierten Fläche der zweiten Teilspanfläche aufgrund der höheren Rauheit besser anhaften als auf der polierten Fläche der ersten Teilspanfläche. Dadurch, dass die zweite Teilspanfläche unpoliert ist - und somit geschmiert werden kann -, wird also das Verkleben eines zu zerspanenden, zähen Werkstoffes an der Schneide und somit das Entstehen einer Aufbauschneide verhindert. Mit der polierten ersten Teilspanfläche werden in Kombination mit der zweiten unpolierten Teilspanfläche die Fräsparameter optimiert, so z.B. eine grössere Zustelltiefe und damit ein höheres Zeitspanvolumen erreicht und die Anwendbarkeit auf mehrere Materialien, insbesondere Verbundmaterialien erweitert.

Regelmässig gilt eine Oberfläche als poliert, wenn sie glänzt und als unpoliert, wenn sie matt ist. Als polierte Oberfläche seien insbesondere ein Bereich der mittleren Oberflächenrauheit Rₐ von zwischen 0.05 µm und 0.2 µm und/oder der Bereich der gemittelten Rautiefe R_{z} von zwischen 0.2 µm und 1 µm definiert. Als unpolierte Oberfläche seien insbesondere ein Bereich der mittleren Oberflächenrauheit Rₐ von zwischen 0.2 µm und 0.4 µm und/oder der Bereich der gemittelten Rautiefe R_{z} von zwischen 0.8 µm und 1.4 µm definiert.

In ihrem weiteren Verlauf kann die zweite Teilspanfläche einen gewölbten Verlauf nehmen. Der Teilspanwinkel der zweiten Teilspanfläche (γ₂) ist deshalb messbar am Übergang von der ersten zur zweiten Teilspanfläche, tangential am Beginn der zweiten Teilspanfläche.

In einer bevorzugten Ausgestaltung des Fräsers beträgt die Breite b der ersten Teilspanfläche senkrecht zur Schneidkante zwischen 0.01 mm und 0.2 mm, insbesondere zwischen 0.04 mm und 0.12 mm.

Eine Ausgestaltung des Fräsers sieht vor, dass der Durchmesser des schneidenden Kopfteils, d.h. der Rotationsdurchmesser der Schneide, zwischen 1 mm und 10 mm, insbesondere 2 mm, 3 mm, 4 mm, 5 mm, 6 mm oder 8 mm beträgt.

Nach einer Ausführungsform der Erfindung weist der Fräser an der Spitze einer Schneide am Umfang eine in der Ebene der ersten Spanfläche bis zu 0.1 mm lange, insbesondere 0.05 mm lange Fase s auf, um damit abermals Ausbrüche zu verhindern.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Es zeigen:
- Fig.1: in einer perspektivischen Darstellung einen Schaftfräser
- Fig.2: einen Ausschnitt einer Werkzeugschneide
- Fig.3: in vergrösserter Darstellung eine Werkzeugschneide gemäss der Darstellung nach Fig.2
- Fig.4: in vergrösserter Darstellung einen Ausschnitt der Stirnseite des Fräsers gemäss der Darstellung nach Fig.5
- Fig. 5: die Stirnseite des Fräsers aus Fig.1

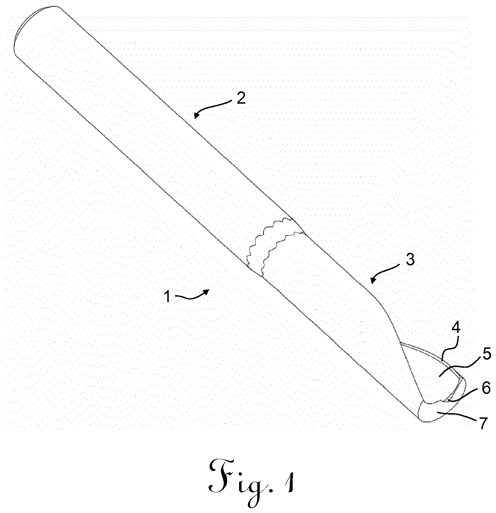

In einer perspektivischen Darstellung ist in Figur 1 ein zerspanendes Werkzeug in Form eines Schaftfräsers in rechtsdrehender Form gezeigt. Der Schaftfräser 1 umfasst einen Schaft 2 sowie ein Kopfteil 3, das eine rechtsgedrallte Schneide aufweist. Die Spanfläche des Fräsers teilt sich auf in eine erste Teilspanfläche 4 und eine zweite Teilspanfläche 5. Die Stirnfläche des Fräsers teilt sich wiederum auf in einen abgesetzten Teil 6 und einen freien Teil 7.

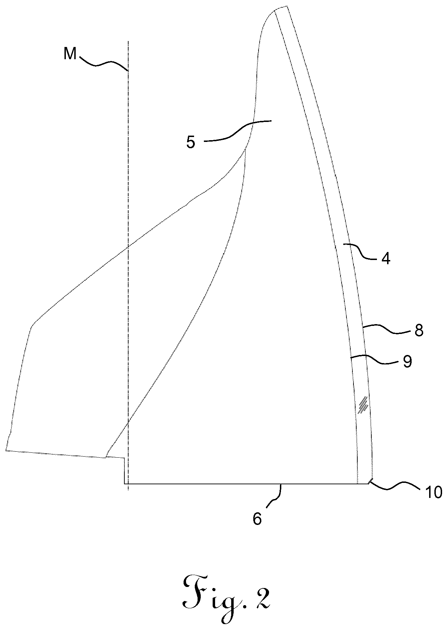

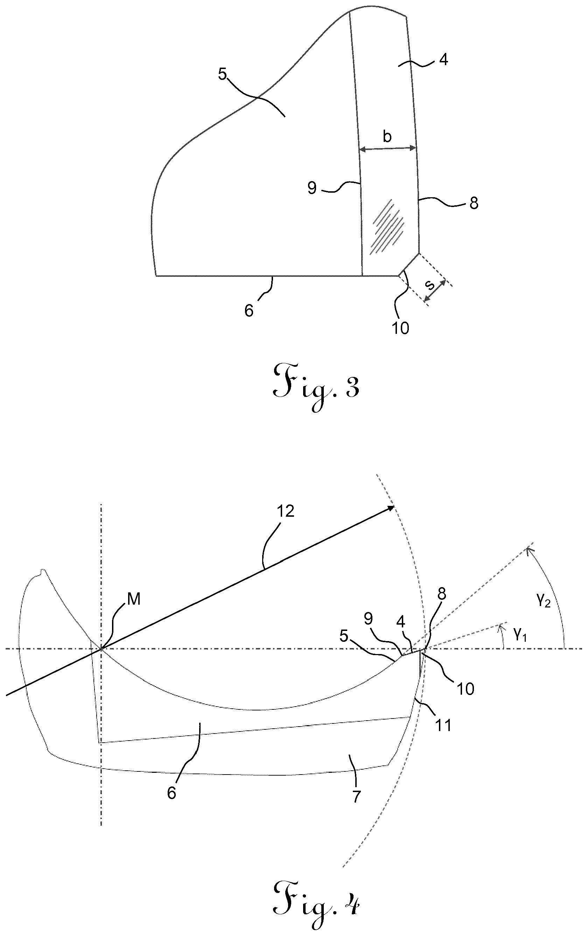

Figur 2 zeigt einen Teil des Kopfteiles 3 in der Seitenansicht mit Aufsicht auf die beiden Teilspanflächen 4 und 5, wobei die Papierebene der Werkzeug-Bezugsebene entspricht. Die erste Teilspanfläche 4 wird über die Teilspanflächenübergangskante 9 von der zweiten Teilspanfläche 5 getrennt. Am Umfang des Kopfteils 3 befindet sich die Schneidkante 8, die in Figur 2 aufgrund des Dralls und bedingt durch die Perspektive gebogen dargestellt ist. Gemäss der Erfindung weist die erste Teilspanfläche 4 eine polierte und die zweite Teilspanfläche 5 eine unpolierte Oberfläche auf, was in den Figuren 2 und 3 durch eine Schraffur gekennzeichnet ist.

Als Detailbereich der Figur 2 zeigt Figur 3 eine Fase 10 mit ihrer Breite s an der Fräserspitze. Diese Fase 10 verbindet die Schneidkante 8 mit der abgesetzten Teilstirnfläche 6. Jeweils senkrecht zur Schneidkante 8 und zur Teilspanflächenübergangskante 9 ist die Breite b der ersten Teilspanfläche 4 definiert. Auch in der Figur 3 ist, gemäss der Erfindung, eine polierte Oberfläche der ersten Teilspanfläche 4 durch eine Schraffur gekennzeichnet.

In Figur 4 ist eine Aufsicht auf einen die Schneide beinhaltenden Ausschnitt der Stirnseite des Fräsers in der Werkzeug-Orthogonalebene gezeigt. Der Fräser 1 rotiert um seine Rotationsachse M und weist einen Schneidkantendurchmesser 12 auf. Die Freifläche 11 des Fräsers 1 kann optional in mehrere Teilfreiflächen unterteilt sein, welche mehreren Teilfreiwinkeln unterliegen. Die erste Teilspanfläche 4 weist einen ersten Teilspanwinkel γ₁ und die zweite Teilspanfläche 5 einen Teilspanwinkel γ₂ auf. Von der Schneidkante 8 bis zur Teilspanflächenübergangskante 9 wird der erste Teilspanwinkel γ₁ der Teilspanfläche 4 beibehalten, wohingegen der zweite Teilspanwinkel γ₂ tangential direkt nach der Teilspanflächenübergangskante 9 am Beginn der zweiten Teilspanfläche 5 messbar ist. Im weiteren Verlauf nimmt die zweite Teilspanfläche 5 vorzugsweise einen gewölbten Verlauf, um somit die Spannut zu bilden, über welche die Späne abtransportiert werden. Die Fase 10 an der Fräserspitze verläuft flächenmässig bevorzugt orthogonal zur Werkzeug-Bezugsebene sowie parallel zur Werkzeug-Schneidenebene. Die Ausprägung der Fase 10 ist in diesem Falle also plan, alternativ kann sie aber beispielsweise auch gewölbt sein.

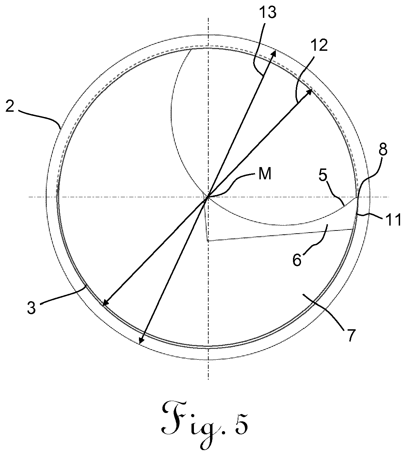

Figur 5 illustriert die gesamte Stirnseite des Fräsers in der Aufsicht, wobei die Papierebene wie in Figur 4 der Werkzeug-Orthogonalebene entspricht. In der dargestellten beispielhaften Ausführungsform ist der Durchmesser 13 des Schaftes 2 des Fräsers grösser als der Durchmesser 12 des Kopfteils 3 des Fräsers.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

### Bezugszeichenliste

- 1: Fräser
- 2: Schaft
- 3: Kopfteil
- 4: erste Teilspanfläche
- 5: zweite Teilspanfläche
- 6: abgesetzte Teilstirnfläche
- 7: freie Teilstirnfläche
- 8: Schneidkante
- 9: Teilspanflächenübergangskante
- 10: Fase an der Schneidkantenspitze
- 11: Freifläche
- 12: Rotationsdurchmesser der Schneidkante
- 13: Schaftdurchmesser

- b: Breite der ersten Teilspanfläche
- s: Länge der Fase an der Schneidkantenspitze
- M: Rotationsachse
- γ₁: erster Teilspanwinkel
- γ₂: zweiter Teilspanwinkel

## Patentansprüche

1. Fräser (1) zum Hochgeschwindigkeitsfräsen bei Betriebsdrehzahlen von zwischen 20000 U/min und 100000 U/min und Vorschubgeschwindigkeiten von zwischen 2.4 m/min und 120 m/min, und zum Einspannen in das Werkzeug eines Flachbettcutters, genau vorgesehen zum Schneiden von Kartonage, Holz, Kunststoff, Aluminium und Verbundplatten aus diesen Materialien, aufweisend:
• einen Schaft (2) zum Einspannen des Fräsers (1),
• ein sich an den Schaft (2) anschliessendes Kopfteil (3) mit genau einer am Umfang befindlichen Schneide, wobei
□ die Schneide eine Spanfläche aufweist und
□ die Spanfläche wenigstens eine erste von der Schneidkante (8) wegführende Teilspanfläche (4) und eine zweite der ersten Teilspanfläche folgende Teilspanfläche (5) aufweist,
**dadurch gekennzeichnet, dass**
• die erste Teilspanfläche (4)
□ einen ersten Teilspanwinkel (γ₁) von zwischen 18° und 30° aufweist,
□ diesen Teilspanwinkel (γ₁) bis zum Beginn der zweiten Teilspanfläche (5) beibehält, und
□ eine polierte Oberfläche aufweist,
und
• die zweite Teilspanfläche (5)
□ einen zweiten Teilspanwinkel (γ₂) von zwischen 22° und 38° aufweist, und
□ eine unpolierte Oberfläche aufweist,
wobei der zweite Teilspanwinkel (γ₂) um zwischen 4° und 8°, insbesondere um zwischen 5° und 7° und insbesondere um 6° grösser ist als der erste Teilspanwinkel (γ₁).

2. Fräser nach Anspruch 1,
**dadurch gekennzeichnet, dass**
der erste Teilspanwinkel (γ₁) zwischen 20° und 28°, insbesondere zwischen 22° und 26°, insbesondere etwa 24° beträgt und der zweite Teilspanwinkel (γ₂) zwischen 24° und 36°, insbesondere zwischen 26° und 34°, insbesondere zwischen 28° und 32° und insbesondere etwa 30° beträgt.

3. Fräser nach einem der vorherigen Ansprüche,
**dadurch gekennzeichnet, dass**
die erste Teilspanfläche (4) eine mittlere Oberflächenrauheit Rₐ von zwischen 0.05 µm und 0.2 µm und/oder eine gemittelte Rautiefe R_{z} von zwischen 0.2 µm und 1 µm aufweist, und die zweite Teilspanfläche (5) eine mittlere Oberflächenrauheit Rₐ von zwischen 0.2 µm und 0.4 µm und/oder eine gemittelte Rautiefe R_{z} von zwischen 0.8 µm und 1.4 µm aufweist.

4. Fräser nach einem der vorherigen Ansprüche,
**dadurch gekennzeichnet, dass**
die erste Teilspanfläche (4) eine Breite (b) senkrecht zur Schneidkante von zwischen 0.01 mm und 0.2 mm, insbesondere von zwischen 0.04 mm und 0.12 mm aufweist.

5. Fräser nach einem der vorherigen Ansprüche,
**dadurch gekennzeichnet, dass**
die zweite Teilspanfläche (5) eine Wölbung aufweist.

6. Fräser nach einem der vorherigen Ansprüche,
**dadurch gekennzeichnet, dass**
die Schneidkante (8) einen Rotationsdurchmesser (12) von zwischen 1 mm und 10 mm, insbesondere von 2 mm, 3 mm, 4 mm, 5 mm, 6 mm oder 8 mm hat.

7. Fräser nach einem der vorherigen Ansprüche,
**dadurch gekennzeichnet, dass**
die Schneidkante (8) der Schneide schraubenlinienförmig entlang einer Mantelfläche verläuft, welche zur Rotationsachse (M) des Werkzeuges konzentrisch ist, wobei die Mantelfläche insbesondere als Zylindermantelfläche ausgebildet ist.

8. Fräser nach einem der vorherigen Ansprüche,
**dadurch gekennzeichnet, dass**
der Fräser (1) eigens zum Fräsen von Platten aus Aluminium, Aluminium-Polyethylen-Verbund, Holzfaser, Hartschaum, Acryl und Polyethylenterephthalat ausgelegt ist.

9. Fräser nach einem der vorherigen Ansprüche,
**dadurch gekennzeichnet, dass**
die Spitze der Schneide am Umfang eine in der Ebene der ersten Spanfläche verlaufende Fase (10) aufweist und dass diese Fase eine Länge (s) von bis zu 0.1 mm, insbesondere von 0.05 mm hat.

## Claims

1. Milling cutter (1) for high speed milling at operating speeds of between 20,000 rpm and 100,000 rpm and feed rates of between 2.4 m/min and 120 m/min, and for clamping in the tool of a flat bed cutter, precisely provided for cutting cardboard, wood, plastic, aluminum and composite panels of these materials, comprising
• a shank (2) for clamping the milling cutter (1),
• a head part (3) adjoining the shank (2) with precisely one blade located on the circumference, wherein
∘ the blade has a rake face, and
∘ the rake face has at least a first partial rake face (4) leading away from the cutting edge (8) and a second partial rake face (5) following the first partial rake face,
**characterized in that**
• the first partial rake face (4)
∘ has a first partial rake angle (γ₁) of between 18° and 30°, ∘ maintains this partial rake angle (γ₁) until the beginning of the second partial rake face (5), and
∘ has a polished surface,
and
• the second partial rake face (5)
∘ has a second partial rake angle (γ₂) of between 22° and 38°, and
∘ has an unpolished surface,
wherein the second partial rake angle (γ₂) is greater than the first partial rake angle (γ₁) by between 4° and 8°, in particular by between 5° and 7° and in particular by 6°.

2. Milling cutter according to claim 1,
**characterized in that**
the first partial rake angle (γ₁) is between 20° and 28°, in particular between 22° and 26°, in particular approximately 24°, and the second partial rake angle (γ₂) is between 24° and 36°, in particular between 26° and 34°, in particular between 28° and 32°, in particular approximately 30°.

3. Milling cutter according to one of the preceding claims,
**characterized in that**
the first partial rake face (4) has a mean surface roughness Rₐ of between 0.05 µm and 0.2 µm and/or a mean roughness depth R_{z} of between 0.2 µm and 1 µm, and the second partial rake face (5) has a mean surface roughness Rₐ of between 0.2 µm and 0.4 µm and/or a mean roughness depth R_{z} of between 0.8 µm and 1.4 µm.

4. Milling cutter according to one of the preceding claims,
**characterized in that**
the first partial rake face (4) has a width (b) perpendicular to the cutting edge of between 0.01 mm and 0.2 mm, in particular of between 0.04 mm and 0.12 mm.

5. Milling cutter according to one of the preceding claims,
**characterized in that**
the second partial rake face (5) has a curvature.

6. Milling cutter according to one of the preceding claims,
**characterized in that**
the cutting edge (8) has a rotation diameter (12) of between 1 mm and 10 mm, in particular of 2 mm, 3 mm, 4 mm, 5 mm, 6 mm or 8 mm

7. Milling cutter according to one of the preceding claims,
**characterized in that**
the cutting edge (8) of the blade extends helically along a jacket surface which is concentric to the axis of rotation (M) of the tool, wherein the jacket surface is designed in particular as a cylindrical jacket surface.

8. Milling cutter according to one of the preceding claims,
**characterized in that**
the milling cutter (1) is specially designed for milling panels of aluminum, aluminum-polyethylene composite, wood fiber, rigid foam, acrylic and polyethylene terephthalate.

9. Milling cutter according to one of the preceding claims,
**characterized in that**
the tip of the blade has a chamfer (10) on its periphery which extends in the plane of the first rake face, and **in that** this chamfer has a length (s) of up to 0.1 mm, in particular of 0.05 mm.

## Revendications

1. Fraise (1) pour le fraisage à grande vitesse à des vitesses de fonctionnement comprises entre 20 000 tr/min et 100 000 tr/min et des vitesses d'avance comprises entre 2,4 m/min et 120 m/min, et destinée à être serrée dans l'outil d'une table de découpe à plat prévue précisément pour la découpe de carton, de bois, de plastique, d'aluminium et de panneaux composites de ces matériaux, présentant :
• une queue (2) pour le serrage de la fraise (1),
• une partie tête (3) attenante à la queue (2) avec exactement une lame située sur la circonférence, dans laquelle
▪ la lame présente une face de coupe et
▪ la face de coupe présente au moins une première face de coupe partielle (4) partant de l'arête de coupe (8) et une deuxième face de coupe partielle (5) faisant suite à la première face de coupe partielle,
**caractérisée en ce que**
• la première face de coupe partielle (4)
▪ présente un premier angle de coupe partiel (γ₁) compris entre 18° et 30°,
▪ conserve cet angle de coupe partiel (γ₁) jusqu'au début de la deuxième face de coupe partielle (5), et
▪ présente une surface polie, et
• la deuxième face de coupe partielle (5)
▪ présente un deuxième angle de coupe partiel (γ₂) compris entre 22° et 38°, et
▪ présente une surface non polie,
dans laquelle le deuxième angle de coupe partiel (γ₂) est supérieur au premier angle de coupe partiel (γ₁) de 4° à 8°, en particulier de 5° à 7° et en particulier de 6°.

2. Fraise selon la revendication 1,
**caractérisée en ce que**
le premier angle de coupe partiel (γ₁) est compris entre 20° et 28°, en particulier entre 22° et 26°, en particulier est d'environ 24°, et le deuxième angle de coupe partiel (γ₂) est compris entre 24° et 36°, en particulier entre 26° et 34°, en particulier entre 28° et 32°, et est en particulier d'environ 30°.

3. Fraise selon l'une des revendications précédentes,
**caractérisée en ce que**
la première face de coupe partielle (4) présente une rugosité de surface moyenne Rₐ comprise entre 0,05 µm et 0,2 µm et/ou une profondeur de rugosité moyenne R_{z} comprise entre 0,2 µm et 1 µm, et la deuxième face de coupe partielle (5) présente une rugosité de surface moyenne Rₐ comprise entre 0,2 µm et 0,4 µm et/ou une profondeur de rugosité moyenne R_{z} comprise entre 0,8 µm et 1,4 µm.

4. Fraise selon l'une des revendications précédentes,
**caractérisée en ce que**
la première face de coupe partielle (4) présente une largeur (b) perpendiculairement à l'arête de coupe comprise entre 0,01 mm et 0,2 mm, en particulier entre 0,04 mm et 0,12 mm.

5. Fraise selon l'une des revendications précédentes,
**caractérisée en ce que**
la deuxième face de coupe partielle (5) présente une convexité.

6. Fraise selon l'une des revendications précédentes,
**caractérisée en ce que**
l'arête de coupe (8) a un diamètre de rotation (12) compris entre 1 mm et 10 mm, en particulier de 2 mm, 3 mm, 4 mm, 5 mm, 6 mm ou 8 mm.

7. Fraise selon l'une des revendications précédentes,
**caractérisée en ce que**
l'arête de coupe (8) de la lame s'étend en hélice le long d'une surface latérale qui est concentrique à l'axe de rotation (M) de l'outil, la surface latérale étant réalisée en particulier sous la forme d'une surface latérale cylindrique.

8. Fraise selon l'une des revendications précédentes,
**caractérisée en ce que**
la fraise (1) est spécialement conçue pour le fraisage de panneaux d'aluminium, de composite aluminium-polyéthylène, de fibre de bois, de mousse rigide, d'acrylique et de polyéthylène téréphtalate.

9. Fraise selon l'une des revendications précédentes,
**caractérisée en ce que**
la pointe de la lame présente sur sa périphérie un chanfrein (10) s'étendant dans le plan de la première face de coupe, et que ce chanfrein a une longueur (s) pouvant atteindre 0,1 mm, en particulier de 0,05 mm.
